# EUROPEAN PATENT APPLICATION

(11) **EP 4 660 625 A1**
(43) Date of publication of application: **10.12.2025**
(21) Application number: 25164892.9
(22) Date of filing: 19.03.2025
(51) Int. Cl.: G01N 29/04, G01N 29/24, G01N 29/44

(54) **STRUCTURAL HEALTH MONITORING APPARATUS AND ASSOCIATED SYSTEM AND METHOD**

(30) Priority: 05.06.2024 US 202418734894
(71) Applicant: The Boeing Company, Arlington, VA 22202 (US)
(72) Inventor: DUNNE, James, Arlington, 22202 (US); PADO, Lawrence, Arlington, 22202 (US); IHN, Jeong-Beom, Arlington, 22202 (US)
(74) Representative: Bryn-Jacobsen, Caelia

(57) **Abstract**

An apparatus for monitoring structural health of an object includes a plurality of sensor pairs. The plurality of sensor pairs each includes an exciting sensor and a receiving sensor. The exciting sensor is configured to transmit a guided wave and the receiving sensor is configured to receive the guided wave. The plurality of sensor pairs are utilized to acquire an individual signature from each one to generate a plurality of individual signatures. A pseudo baseline signature is generated by computing an average of the plurality of individual signatures and compared to the individual signature of a corresponding one of the plurality of sensor pairs to determine whether the individual signature is different from the pseudo baseline signature. If the individual signature is different, an area of the object proximate to the corresponding one of the plurality of sensors pairs, is identified as a potential abnormality area.

## Description

### FIELD

This disclosure relates generally to monitoring structural health of an object and, more particularly, to utilizing a pseudo baseline signature to monitor structural health of an object.

### BACKGROUND

Structural health monitoring evaluates the condition of an object to detect any abnormalities or defects within its structure. One method of monitoring uses guided waves, which are mechanical waves that travel along a surface or through the object's structure. To detect abnormalities, current wave signatures are compared to a baseline signature, a reference measurement taken prior to any known issues.

However, obtaining baseline signatures has several challenges, such as each baseline signature is unique to a specific object and must be measured and stored separately. Additionally, baseline signatures depend heavily on environmental conditions, necessitating compensation algorithms to account for variations in environmental conditions between baseline signatures and current wave signatures. Further, measuring baseline signatures for in-service objects is also difficult, as abnormalities are detected relative to the unknown or potentially flawed initial state at the time of baseline signature capture. Consequently, current methods for acquiring and utilizing baseline signatures for structural health monitoring are time-consuming, inefficient, and complex.

### SUMMARY

The subject matter of the present application has been developed in response to the present state of the art, and in particular, in response to the problems of and needs created by, or not yet fully solved by, existing structural health monitoring apparatuses and associated systems and methods. Generally, the subject matter of the present application has been developed to provide a structural health monitoring apparatus and associated system and method that overcomes at least some of the above-discussed shortcomings of prior art techniques.

Disclosed herein is an apparatus for monitoring structural health of an object that includes a plurality of sensor pairs, a processor, and a memory that stores codes executable by the processor. The plurality of sensor pairs are configured to be coupled to the object. Each one of the plurality of sensor pairs includes an exciting sensor and a receiving sensor. The exciting sensor is configured to transmit a guided wave and the receiving sensor is configured to receive the guided wave transmitted by the exciting sensor. The plurality of sensor pairs are geometrically similar to each other. The code is executable by the processor to acquire an individual signature from each one of the plurality of sensor pairs to generate a plurality of individual signatures. Each individual signature represents the guided wave received by the receiving sensor of a corresponding one of the plurality of sensor pairs. The code is also executable by the processor to generate a pseudo baseline signature by computing an average of the plurality of individual signatures. The code is further executable by the processor to compare the individual signature of a corresponding one of the plurality of sensor pairs to the pseudo baseline signature to determine whether the individual signature of the corresponding one of the plurality of sensor pairs is different from the pseudo baseline signature. If the individual signature of the corresponding one of the plurality of sensor pairs is different, the code is additionally executable to identify an area of the object proximate to the corresponding one of the plurality of sensors pairs, as a potential abnormality area. The preceding subject matter of this paragraph characterizes example 1 of the present disclosure.

The guided wave transmitted by the exciting sensor of each one of the plurality of sensor pairs is a lamb wave. The preceding subject matter of this paragraph characterizes example 2 of the present disclosure, wherein example 2 also includes the subject matter according to example 1, above.

The guided wave transmitted by the exciting sensor of each one of the plurality of sensor pairs is a surface wave. The preceding subject matter of this paragraph characterizes example 3 of the present disclosure, wherein example 3 also includes the subject matter according to example 1, above.

After the pseudo baseline signature is generated, the pseudo baseline signature is promptly compared to the individual signature of the corresponding one of the plurality of sensor pairs. The preceding subject matter of this paragraph characterizes example 4 of the present disclosure, wherein example 4 also includes the subject matter according to any of examples 1-3, above.

The geometric similarity of each one of the plurality of sensor pairs includes each one of the plurality of sensor pairs has a distance that is the same between the exciting sensor and the receiving sensor and each one of the plurality of sensor pairs has a consistent spatial displacement in three-dimensional space between the exciting sensor and the receiving sensor. The preceding subject matter of this paragraph characterizes example 5 of the present disclosure, wherein example 5 also includes the subject matter according to any of examples 1-4, above.

The memory stores code executable by the processor to define an abnormality index based on a degree of deviation between the pseudo baseline signature and the plurality of individual signatures. The memory also stores code executable by the processor to define an individual index based on a degree of deviation between the pseudo baseline signature and the individual signature of the corresponding one of the plurality of sensor pairs. The abnormality index and the individual index are numerical values. The corresponding one of the plurality of sensor pairs is different from the pseudo baseline signature if the individual index is larger than the abnormality index, such that the area of the object proximate to the corresponding one of the plurality of sensor pairs is identified as the potential abnormality area. The preceding subject matter of this paragraph characterizes example 6 of the present disclosure, wherein example 6 also includes the subject matter according to any of examples 1-5, above.

If the individual signature of the corresponding one of the plurality of sensor pairs is similar to the pseudo baseline signature, then the area of the object, proximate to the corresponding one of the plurality of sensor pairs is identified as a structurally normal area. The preceding subject matter of this paragraph characterizes example 7 of the present disclosure, wherein example 7 also includes the subject matter according to any of examples 1-6, above.

The plurality of sensor pairs are configured to operate in a continuous monitoring mode. The processor continuously acquires an updated individual signature from each one of the plurality of sensor pairs, generates an updated pseudo baseline signature, and compares the updated individual signature of each one of the plurality of sensor pairs to the updated pseudo baseline signature to provide real-time detection and identification of potential abnormality areas. The preceding subject matter of this paragraph characterizes example 8 of the present disclosure, wherein example 8 also includes the subject matter according to any of examples 1-7, above.

Further disclosed herein is a structural health monitoring system including an object to be monitored for structural health and a plurality of sensors coupled to the object. Each one of the plurality of sensor pairs includes an exciting sensor and a receiving sensor. The exciting sensor is configured to transmit a guided wave and the receiving sensor is configured to receive the guided wave transmitted by the exciting sensor. The plurality of sensor pairs are geometrically similar to each other and a structure of the object through which the guided wave of each one of the plurality of sensor pairs propagates is the same. The structural health monitoring system also includes a processor and a memory that stores code executable by the processor. The code is executable to acquire an individual signature from each one of the plurality of sensor pairs to generate a plurality of individual signatures. Each individual signature represents the guided wave received by the receiving sensor of a corresponding one of the plurality of sensor pairs. The code is also executable to generate a pseudo baseline signature by computing an average of the plurality of individual signatures and compare the individual signatures of a corresponding one of the plurality of sensor pairs to the pseudo baseline signature to determine whether the individual signature of the corresponding one of the plurality of sensor pairs is different from the pseudo baseline signature. If the individual signature of the corresponding one of the plurality of sensor pairs is different, the code is further executable to identify an area of the object, proximate to the corresponding one of the plurality of sensor pairs, as a potential abnormality area. The preceding subject matter of this paragraph characterizes example 9 of the present disclosure.

The guided wave transmitted by the exciting sensor of each one of the plurality of sensor pairs is configured to propagate through a thickness of the object in a propagation direction that is parallel to a surface of the object. The preceding subject matter of this paragraph characterizes example 10 of the present disclosure, wherein example 10 also includes the subject matter according to example 9, above.

The guided wave transmitted by the excited sensor of each one of the plurality of sensor pairs is configured to propagate along a surface of the object, moving in a circular or elliptical motion from the exciting sensor. The preceding subject matter of this paragraph characterizes example 11 of the present disclosure, wherein example 11 also includes the subject matter according to example 9, above.

The plurality of sensor pairs are positioned on a surface of the structure of the object. The preceding subject matter of this paragraph characterizes example 12 of the present disclosure, wherein example 12 also includes the subject matter according to any of examples 9-11, above.

The plurality of sensor pairs are embedded within the structure of the object. The preceding subject matter of this paragraph characterizes example 13 of the present disclosure, wherein example 13 also includes the subject matter according to any of examples 9-12, above.

The plurality of sensor pairs are coupled to, or located proximate to, a plurality of rivet pairs on the object, the individual rivets of each one of the plurality of rivet pairs spaced equidistant from each other. The preceding subject matter of this paragraph characterizes example 14 of the present disclosure, wherein example 14 also includes the subject matter according to any of examples 9-13, above.

The object to be monitored for abnormalities is an aircraft. The preceding subject matter of this paragraph characterizes example 15 of the present disclosure, wherein example 15 also includes the subject matter according to any of examples 9-14, above.

The plurality of sensor pairs are coupled to a localized area of the object. The localized area of the object corresponds to an area of the object that is susceptible to abnormalities. The preceding subject matter of this paragraph characterizes example 16 of the present disclosure, wherein example 16 also includes the subject matter according to any of examples 9-15, above.

Further disclosed herein is a method of monitoring structural health of an object. The method includes acquiring an individual signature from each one of a plurality of sensor pairs to generate a plurality of individual signatures. Each individual signature represents a guided wave transmitted by an exciting sensor and received by a receiving sensor of a corresponding one of the plurality of sensor pairs. The method also includes generating a pseudo baseline signature by computing an average of the plurality of individual signatures. The method further includes comparing the individual signature of a corresponding one of the plurality of sensor pairs to the pseudo baseline signature to determine whether the individual signature of the corresponding one of the plurality of sensor pairs is different from the pseudo baseline signature. If the individual signature of the corresponding one of the plurality of sensor pairs is different, the method additionally includes, identifying an area of the object, proximate to the corresponding one of the plurality of sensor pairs as a potential abnormality area. The preceding subject matter of this paragraph characterizes example 17 of the present disclosure.

The method includes defining an abnormality index based on a degree of deviation between the pseudo baseline signature and the plurality of individual signatures. The method also includes defining an individual index based on a degree of deviation between the pseudo baseline signature and the individual signature of the corresponding one of the plurality of sensor pairs. The corresponding one of the plurality of sensor pairs is different from the pseudo baseline signature if the individual index is larger than the abnormality index, such that the area of the object proximate to the corresponding one of the plurality of sensor pairs is identified as the potential abnormality area. The preceding subject matter of this paragraph characterizes example 18 of the present disclosure, wherein example 18 also includes the subject matter according to example 17, above.

The plurality of sensor pairs are configured to operate in a periodic monitoring mode, such that the individual signature from each one of the plurality of sensor pairs is acquired and compared to the pseudo baseline signature at specific monitoring times to detect and identity potential abnormality areas. The preceding subject matter of this paragraph characterizes example 19 of the present disclosure, wherein example 19 also includes the subject matter according to any of examples 17-18, above.

The plurality of sensor pairs are configured to operate in a continuous monitoring mode, continuously acquiring an updated individual signature from each one of the plurality of sensor pairs, generating an updated pseudo baseline signature, and comparing the updated individual signature from each one of the plurality of sensor pairs to the updated pseudo signature to enable real-time detection and identification of the potential abnormality area. The preceding subject matter of this paragraph characterizes example 20 of the present disclosure, wherein example 20 also includes the subject matter according to any of examples 17-19, above.

The described features, structures, advantages, and/or characteristics of the subject matter of the present disclosure may be combined in any suitable manner in one or more examples, including examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example, or implementation. In other instances, additional features and advantages may be recognized in certain examples, and/or implementations that may not be present in all examples, or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:
Figure 1 is a schematic view of an apparatus for monitoring structural health of an object, according to one or more examples of the present disclosure;
Figure 2A is a schematic graphical view of a plurality of individual signatures corresponding to a plurality of sensor pairs, according to one or more examples of the present disclosure;
Figure 2B is a schematic graphical view of a pseudo baseline signature of the plurality of sensor pairs, according to one or more examples of the present disclosure;
Figure 2C is a schematic graphical view of the pseudo baseline signature of Figure 2B compared to an individual signature of Figure 2A, according to one or more examples of the present disclosure;
Figure 3A is a schematic cross-sectional view of an object with a sensor pair on the surface of the object, with an exciting sensor transmitting a guided wave to a receiving sensor, according to one or more examples of the present disclosure;
Figure 3B is a schematic cross-sectional of the object of Figure 3A, with an abnormality within the object, according to one or more examples of the present disclosure;
Figure 4 is a schematic perspective view of an object with a plurality of rivet pairs, having a sensor pair corresponding with one of the rivet pairs, according to one or more examples of the present disclosure; and
Figure 5 is a schematic flow view of a method of monitoring structural health of an object, according to one or more examples of the present disclosure.

### DETAILED DESCRIPTION

Reference throughout this specification to "one example," "an example," or similar language means that a particular feature, structure, or characteristic described in connection with the example is included in at least one example of the subject matter of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the subject matter of the present disclosure, however, absent an express correlation to indicate otherwise, an implementation may be associated with one or more examples.

Disclosed herein are examples of an apparatus for monitoring structural health of an object and associated system and method. The following provides some features of at least some examples of the apparatus and associated system and method. The structural health apparatus is utilized to monitor the structural health of an object without the need for a baseline signature. As used herein, a baseline signature refers to a reference measurement of an object being monitored, taken before abnormalities are present (i.e., detect-free). The baseline signature serves as a standard for comparison against subsequent signatures to detect any changes or abnormalities. However, due to various issues with acquiring a baseline signature that is defect-free, it is not always possible or practical to obtain a baseline signature for an object that is being monitored. For example, if the object is already be in use (i.e., an in-service object), any baseline signature obtained would inherently include any existing abnormalities present at the time of capture. In other words, if the baseline signature, which is meant to represent a defect-free state of the object, contains abnormalities, it cannot serve as an accurate reference for detecting any abnormalities in the structure, thereby compromising the reliability of the structure health monitoring process. Additionally, any baseline signature comparison must take into account and apply compensation algorithms for environmental differences (e.g., weather) between baseline signatures and subsequent signatures, adding to the complexity of obtaining and utilizing baseline signatures.

Accordingly, the apparatus for monitoring structural health herein utilizes a pseudo baseline signature to monitor the structural health of an object. As used herein, a pseudo baseline signature refers to a reference measurement of an object being monitored, captured at any point in time and used in immediate comparison with a current signature to detect changes or abnormalities. Specifically, the pseudo baseline signature is computed using an average of multiple individual signatures that are simultaneously obtained, where each individual signatures represent guided wave propagated through the object. When comparing a pseudo baseline signature to a current signature (i.e., one of the multiple individual signatures), abnormalities in the object can be detected, regardless of when the abnormality was formed in the object, and irrespective of environmental conditions. That is, a pseudo baseline signature can be obtained at any point in time for an object with existing abnormalities and under any of various environmental conditions. A pseudo baseline signature is advantageous to a baseline signature as it eliminates the need for categorization and retention of a baseline signature, does not require environmental compensation, and existing damage at installation of the apparatus is detectable and does not invalidate results.

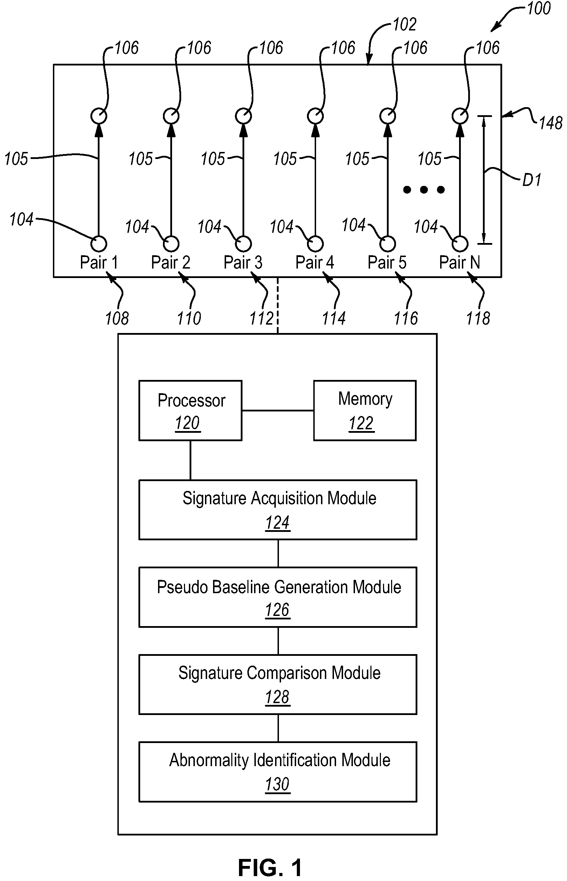

Referring to Figure 1, an apparatus 100 for monitoring structural health of an object 148 is shown. The apparatus 100 utilizes guided waves 105 which are mechanical waves that propagate along a surface or through a structure of the object 148. These guided waves 105 exhibit characteristics, such as dispersion, mode conversion, and multimodal behavior, making them sensitive to various types of defects and structural abnormalities in or on the object 148. Accordingly, the guided waves 105 are utilized to monitor the structural health of the object 148. In some examples, the guided waves 105 are Lamb waves. Lamb waves are guided waves that propagate through the thickness of a structure, bouncing back and forth between the structure surfaces. Moreover, Lamb waves are highly sensitive to changes in the material properties of an object and can detect a wide range of abnormalities, including cracks, delamination, and corrosion. In other examples, the guided waves 105 are surface waves. Surface waves travel along the surface of the object and are particularly effective for inspecting large areas. Surface waves are sensitive to surface irregularities and can detect abnormalities such as disbonds and surface cracks.

The apparatus 100 is utilized to identify potential abnormality areas in the object 148. An abnormality, as used herein, refers to any deviation, irregularity, or change in the structural integrity of the monitored object, including defects, damage, deterioration, anomalies, or any other indicators of structural instability or compromised functionality. Abnormalities may include any of various forms, such as cracks, delamination, corrosion, deformation, material loss, discontinuities, or changes in mechanical properties. Detecting potential abnormality areas is important for assessing the condition of the structure, identifying potential risks or hazards, and facilitating timely maintenance or intervention to prevent structural impairment or failure.

In order to identify potential abnormality areas, the apparatus 100 includes a plurality of sensor pairs 102 that are configured to be coupled to the object 148. The apparatus 100 may include any number of plurality of sensor pairs 102, including more or less than the six sensor pairs shown in Figure 1. In some examples, the apparatus 100 may include six sensor pairs including a first pair 108, a second pair 110, a third pair 112, a fourth pair 114, a fifth pair 116, and a *N* pair 118.

Each one of the plurality of sensor pairs 102 includes an exciting sensor 104 and a receiving sensor 106. The exciting sensor 104 is configured to transmit the guided wave 105, while the receiving sensor 106 is configured to receive the guided wave 105 transmitted by the exciting sensor 104. That is, the exciting sensor 104 generates and transmits a guided wave 105 along or through the object 148. When activated, the exciting sensor 104 produces a wave pulse that interacts with the object 148 and potential abnormalities of the object 148. In some examples, the exciting sensor 104 employs a piezoelectric transducer that is used to generate guided waves by converting electrical signals into mechanical vibrations. Characteristics of the guided wave 105, such as frequency and mode, can be adjusted by the exciting sensor 104 to change the detection sensitivity of abnormalities.

The receiving sensor 106 detects the guided wave 105 transmitted by the exciting sensor 104 after the guided wave 105 has interacted with the object 148. Positioned at a predetermined distance from the exciting sensor 104, the receiving sensor 106 captures the wave signal that has traveled along or through the object 148. The captured signal contains information about the object 148 including any reflections, scattering, or diffractions caused by abnormalities. The receiving sensor 106 may use piezoelectric elements or other sensitive detection mechanisms to convert the mechanical vibrations back into electrical signals, which is then processed to form an individual signature of the guided wave 105.

The plurality of sensor pairs 102 are geometrically similar to each other. In some examples, the geometric similarity between each of the plurality of sensor pair 102 is at least seventy-five percent. In other examples, the geometric similarity between each of the plurality of sensor pairs 102 is at least ninety percent. In yet other examples, the geometric similarity between each of the plurality of sensor pairs 102 is at least ninety-five percent. Specifically, the plurality of sensor pairs 102 are geometrically similar in both a distance (D1) and spatial displacement (i.e., consistent spatial displacement) in three-dimension space between the exciting sensor 104 and the receiving sensor 106. That is, the distance (D1) is the fixed separation between the exciting sensor 104 and the receiving sensor 106 within each one of the plurality of sensor pairs 102. Moreover, spatial displacement encompasses the three-dimensional arrangement of each one of the plurality of sensor pairs 102, ensuring that their relative positions along all spatial dimensions (i.e., x, y, and z-axes) remain consistent. The similarity in distance and consistent spatial displacement is necessary in order to get accurate and meaningful results when comparing the pseudo baseline signature to the individual signatures of a corresponding one of the plurality of sensor pairs 102. Additionally, an underlying structure of the object 148 in which the guided waves 105 travel must be the same to ensure consistent wave propagation characteristics. Accordingly, if the plurality of sensor pairs 102 are geometrically similar and the underlying structure in which the guided waves 105 travel is the same, then at any given time the apparatus 100 may be utilized to evaluate the object 148 for abnormalities.

The apparatus 100 also includes a processor 120 and a memory 122. In various examples, non-transitory computer readable instructions (i.e., code) stored in the memory 122 (i.e., storage media) cause the processor 120 to monitor the structural health of the object 148. The processor 120 (e.g., central processing unit) may be incorporated into various computing devices, such as a desktop computer, a laptop computer, a tablet computer, a smart phone, a smart watch, a smart TV, etc. In some examples, a web-based portal may facilitate access to the processor 120, allowing the apparatus 100 to be utilized remotely regardless of a physical location in relation to the processor 120. Modules to monitor the structural health of the object 148 may include a signature acquisition module 124, a pseudo baseline generation module 126, a signature comparison module 128, and an abnormality identification module 130.

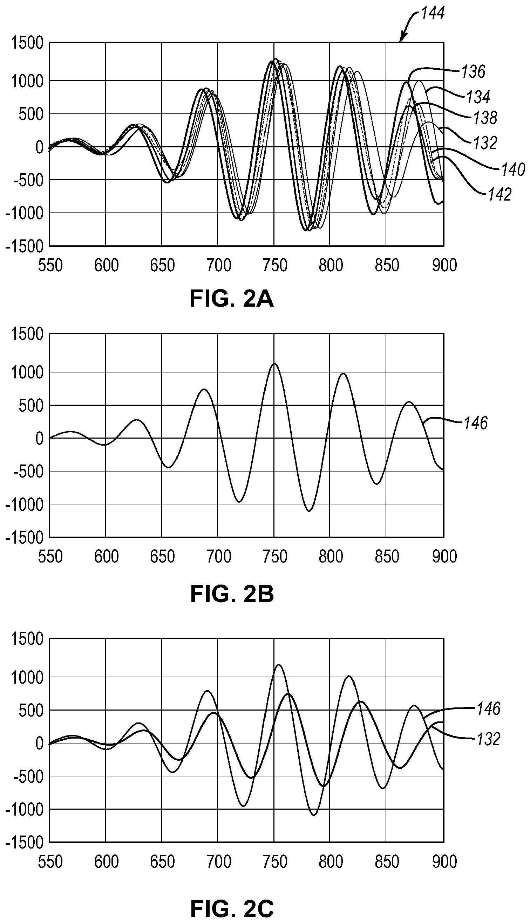

The signature acquisition module 124 is configured to acquire an individual signature from each one of the plurality of sensor pairs 102 to generate a plurality of individual signatures. Each individual signature represents the guided wave 105 received by the receiving sensor 106 of a corresponding one of the plurality of sensor pairs 102. That is, each one of the plurality of sensor pairs 102 generates, transmits, and receives the corresponding guided wave 105 and the signature acquisition module 124 is utilized to process the raw signals into individual signatures. As shown in Figure 2A, a graph illustrates a plurality of individual signatures 144, with each one of the individual signatures corresponds with one of the plurality of sensor pairs 102. The x-axis represents a distance, where each point on the x-axis corresponds to a specific location along the path traveled by the guided wave and the y-axis represents an amplitude of the guided wave, indicating how much the signal deviates from its baseline or zero point, reflecting the guided wave's energy as it travels through or along the object 148. The graph illustrates representative distances and amplitudes of the guided wave, such as distances represented by numerical values between 550 and 900 and amplitudes represented by numerical values between 1500 and -1500. Accordingly, each individual signature is acquired from one of the plurality of sensor pairs 102 and is a representation of the guided wave 105 after it has propagated on or through the object 148. Specifically, each individual signature represents the characteristics of the received guided wave 105, including any alterations caused by structural features or abnormalities within or on the object 148. Any alterations may manifest as changes in amplitude, phase, or frequency of the wave, which are captures in the electrical signal. For example, the graph illustrates six individual signatures: a first individual signature 132 corresponds with the first pair 108, a second individual signature 134 corresponds with the second pair 110, a third individual signature 136 corresponds with the third pair 112, a fourth individual signature 138 corresponds with the fourth pair 114, a fifth individual signature 140 corresponds with the fifth pair 116, and a N individual signature 142 corresponds with a *N* pair 118.

Referring back to Figure 1, the pseudo baseline generation module 126 is configured to generate the pseudo baseline signature 146 by computing an average of the plurality of individual signatures 144. That is, the pseudo baseline generation module 126 collects the plurality of individual signatures 144 by the signature acquisition module 124 and processes them to create a representative baseline. Specifically, the pseudo baseline generation module 126 calculates the average value of the corresponding data points across the plurality of individual signatures 144 to combine the plurality of individual signatures 144 into an averaged signature, or the pseudo baseline signature 146. As described above, the pseudo baseline signature 146 may be utilized as a reference measurement for the structural health of the object 148. As shown in Figure 2B, a graph illustrates the pseudo baseline signature 146 that is generated by averaging the first individual signature 132, the second individual signature 134, the third individual signature 136, the fourth individual signature 138, the fifth individual signature 140, and the *N* individual signature 142 of Figure 2A.

Referring back to Figure 1, the signature comparison module 128 is configured to compare an individual signature of a corresponding one of the plurality of sensor pairs 102, such as the first individual signature 132, to the pseudo baseline signature 146 to determine whether the individual signature of the corresponding one of the plurality of sensor pairs 102 is different from the pseudo baseline signature 146. In other words, the signature comparison module 128 is utilized to identify deviations in individual signatures compared to the pseudo baseline signature 146 that may indicate potential abnormalities in the object 148. In some examples, the signature comparison module 128 may measure a degree of deviation between the individual signature and the pseudo baseline signature to determine whether there is a difference between the signatures. The comparison may be guided by a predetermined threshold limit, where if the degree of dissimilarity surpasses the threshold limit the divergence between the signatures exceeds an acceptable margin and the signatures are considered different. The predetermined threshold limit may be determined based on factors such as the characteristics of the object 148 or specific requirements of the application.

In one example, the apparatus 100 may define an abnormality index based on a degree of deviation between the pseudo baseline signature 146 and plurality of individual signatures 144. The apparatus 100 may further define an individual index based on a degree of deviation between the pseudo baseline signature 146 and the individual signature of the corresponding one of the plurality of sensor pairs 102. The abnormality index and the individual index are numerical values, providing quantitative insights into the level of deviation observed. The corresponding one of the plurality of sensor pairs 102 if different from the pseudo baseline signature 146 if the individual index is larger than the abnormality index.

When the plurality of sensor pairs 102 are geometrically similar and are positioned on a consistent underlying structure of the object 148, the corresponding individual signatures of each one of the plurality of sensor pairs 102 will be similar regardless of the environmental conditions during data acquisition. Consequently, when comparing an individual signature to the pseudo baseline signature 146, any significant difference can be attributed to potential abnormalities. This inference is based on the assumption that variations in the individual signatures, given a controlled and consistent setup, are primarily due to structural abnormalities or defects. Therefore, detecting such discrepancies allows for the identification and localization of abnormalities within or on the object 148.

As shown in Figure 2C, a graph illustrates the pseudo baseline signature 146 compared to an individual signature, specifically, the first individual signature 132. The graph serves as a visual representation of the degree of deviation between the pseudo baseline signature 146 and the first individual signature 132. As shown, the first individual signature 132 and the pseudo baseline signature 146 are not visually aligned for at least a portion of the length of the first individual signature 132. To determine whether the first individual signature 132 and the pseudo baseline signature 146 are different, the differences between the signatures can be assessed visually or calculated using methods to determine a degree of deviation, such as statical analysis or computational algorithms. The threshold for considering the two signatures as different may vary depending on the specific object or application. Although Figure 2C only illustrates one of the plurality of individual signatures 144 compared to the pseudo baseline signature 146, each one of the plurality of individual signatures will be individually compared to the pseudo baseline signature 146 to determine whether the individual signature is different from the pseudo baseline signature 146. That is, after the pseudo baseline signature 146 is generated, it is promptly and individually compared to each one of the plurality of individual signatures of the corresponding one of the plurality of sensor pairs. Prompt comparison, meaning the comparison is performed without delay, between the pseudo baseline signature 146 and the individual signature ensures that the pseudo baseline signature 146 accurately represents the structural health of the object 148 at the given time.

Referring back to Figure 1, if the individual signature of the corresponding one of the plurality of sensor pairs 102 is different from the pseudo baseline signature 146, the abnormality identification module 130 is configured to identify an area of the object 148, proximate to the corresponding one of the plurality of sensor pairs 102, as a potential abnormality area. In some examples, the abnormality identification module 130 may identify the area between the exciting sensor 104 and the receiving sensor 106 of the corresponding one of the plurality of sensor pairs 102 as the potential abnormality area. In other examples, the abnormality identification module 130 may identify a specific area between the exciting sensor 104 and the receiving sensor 106 of the corresponding one of the plurality of sensor pairs 102 as the potential abnormality area based on an analysis of the propagation characteristic of the guided wave. In yet other examples, the abnormality identification module 130 may identify the potential abnormality area as a zone including the area between the exciting sensor 104 and the receiving sensor 106, as well as, an additional region extending beyond them. Accordingly, identifying a potential abnormality area provides targeted information about possible structural issues within specified regions of the object 148, enabling more efficient and focused maintenance efforts. After being identified, the potential abnormality area may be flagged for further inspection, maintenance, or repair.

Additionally, in some examples, if the individual signature of the corresponding one of the plurality of sensor pairs 102 is similar to the pseudo baseline signature 146, then the abnormality identification module 130 may be configured to identify the area of the object 148 proximate to the corresponding one of the plurality of sensor pairs 102 as a structurally normal area. The structurally normal area would not be flagged for further inspection, maintenance, or repair at the given time.

In some examples, the plurality of sensor pairs 102 are configured to operate in a continuous monitoring mode. That is, the processor 120 continuously acquires an updated individual signature from each one of the plurality of sensor pairs 102, generates an updated pseudo baseline signature, and compares the updated individual signatures to the updated pseudo baseline signature to provide real-time detection and identification of potential abnormality areas. If at any given time an updated individual signature is found to be different from the updated pseudo baseline signature, then the apparatus 100 will identify the area of the object 148 proximate to the corresponding one of the plurality of sensor pairs 102 as a potential abnormality area. Continuous monitoring allows for real-time identification of potentially abnormal areas, allowing for immediate awareness of any structural changes in an area being monitored of the object 148. In other examples, the plurality of sensor pairs 102 are configured to operate in a periodic monitoring mode. That is, the processor 120 periodically acquires an update individual signature from each one of the plurality of sensor pairs 102, generates an updated pseudo baseline signature, and compares the updated individual signatures to the updated pseudo baseline signature to provide monitoring at a specific time to detect and identify potential abnormality areas. Periodic monitoring ensures structural health oversight at specific times, such as specific maintenance intervals, facilitating efficient resource allocation and maintenance scheduling.

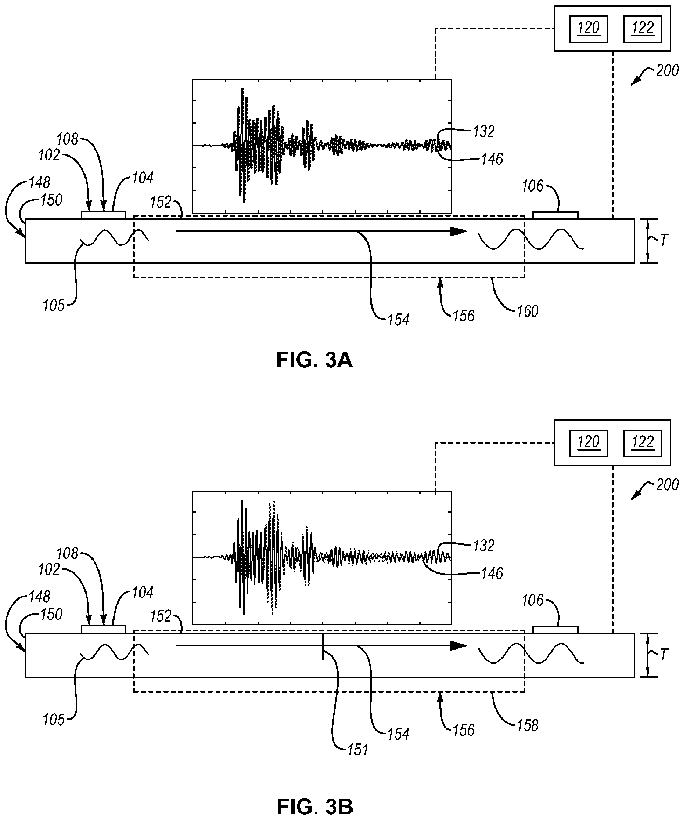

As shown in Figures 3A and 3B, is a structural health monitoring system 200. The structural health monitoring system 200 is utilized to monitor the structural health of an object 148, which is shown in a cross-sectional view, with one of the plurality of sensor pairs 102 shown coupled to the object 148. As described above, the object 148 includes a plurality of sensor pairs 102 that are coupled to the object 148 in a geometrically similar fashion. While the structural health monitoring system 200 will be described using a representative one of the plurality of sensor pairs, the first pair 108, it is important to note that the object 148 may include any number of sensor pairs that would each operate in the same manner. **In** some examples, the plurality of sensor pairs 102 are positioned on a surface of the object 148. For example, the first pair 108 is positioned on the surface 152 the object 148. Sensors may be positioned on the surface of the object for reasons such as accessibility, non-intrusive monitoring, enhanced sensitivity, any various other purposes. In other examples, the plurality of sensor pairs 102 are embedded within the structure 150 of the object 148 for reasons such as enhanced structural integration, protection from external elements, or other specific requirements. That is, the plurality of sensors pairs 102 are integrated into a structure of the object 148 during its manufacturing process or are inserted into the structure in a way that they become an integral part of it.

Specifically, the exciting sensor 104, of the first pair 108, transmits a guided wave 105 that propagates within or along a structure 150 of the object 148 in a propagation direction 154. In one example, the guided wave 105 propagates through a thickness (T) of the object 148 in the propagation direction 154 that is parallel to a surface 152 of the object 148. That is, the guided wave 105 propagates back and forth between the top surface 152 and a bottom surface of the object 148. In other examples, the guided wave 105 propagates along the surface 152 of the object 148, moving in a circular or elliptical motion from the exciting sensor 104. The receiving sensor 106 receives the guided wave 105 after it has propagated within or along the object 148. The guided wave 105, received by the receiving sensor 106, is utilized by the processor 120 and memory 122 to generate the first individual signature 132 for the first pair 108. The first individual signature 132 is compared to the pseudo baseline signature 146, which is generated by computing the average of the plurality of individual signatures 144.

The structural health monitoring system 200 is utilized to identify abnormalities or lack of abnormalities where structural health status is unknown. Referring to Figure 3A, the object 148 exhibits no abnormalities on or within the object 148. Upon comparison, the first individual signature 132 is similar to the pseudo baseline signature 146, indicating structural integrity. Accordingly, the area 156, proximate to the first pair 108, is identified as a structurally normal area 160. Conversely, referring to Figure 3B, the object 148 exhibits an abnormality 151 within the object 148. Upon comparison, the first individual signature 132 is different from the pseudo baseline signature 146, indicating an abnormality. Accordingly, the area 156, proximate to the first pair 108, is identified as a potential abnormality area 158. The object 148 may be flagged for inspection, maintenance, or repair to discover and address the abnormality 151 that was previously unknown.

The structural health monitoring system 200 may be used to monitor any object where monitoring structural health is beneficial. For example, the structural health monitoring system 200 may be used in to monitor the structural integrity of bridges or buildings, in aerospace to ensure the safety of aircraft structures, and in automotive industries to monitor vehicle components, among other applications. In some examples, the structural health monitoring system 200 is utilized to monitor for abnormalities in an aircraft 166. The structural health monitoring system 200 may be used to monitor structural health about an entirety of an object 148, such that the plurality of sensor pairs are positioned across an entirely of the object 148. Conversely, the structural health monitoring system 200 may be employed to target specific areas of interest on the object 148, such as areas that are susceptible to abnormalities or deemed important for structural integrity. For example, the plurality of sensor pairs 102 may be coupled to a localized area 168 of the object 148.

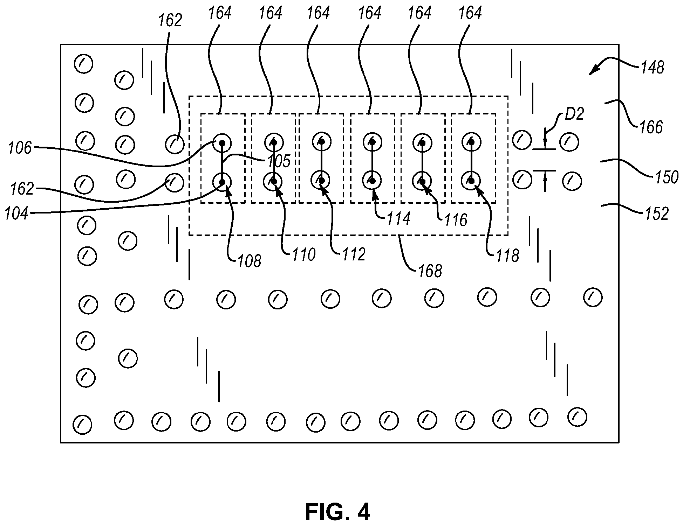

In some examples, the plurality of sensor pairs 102 are coupled to, or located proximate to, a component of the object 148. Coupling or locating the plurality of sensor pairs 102 proximate to a component of the object 148 may help ensure that the sensor pairs are geometrically similar to each other. For example, as shown in Figure 4, the plurality of sensor pairs 102 are coupled to a plurality of rivet pairs 164 on the object 148. The individual rivets 162 of each one of the plurality of rivet pairs 164 are spaced equidistant from each other, such that the individual rivets 162 of each rivet pair 164 are spaced a distance D2 from each other. As shown, the plurality of sensor pairs 102 are coupled to the plurality of rivet pairs, such that the the first pair 108, the second pair 110, the third pair 112, the fourth pair 114, the fifth pair 116, and the N pair 118 are each coupled to a corresponding one of the plurality of rivet pairs 164. Other sets of plurality of sensors pairs 102 may correspond to other localized areas 168 of the object 148, such as other sets of rivet pairs, allowing multiple areas may be monitored by a corresponding structural health monitoring system 200.

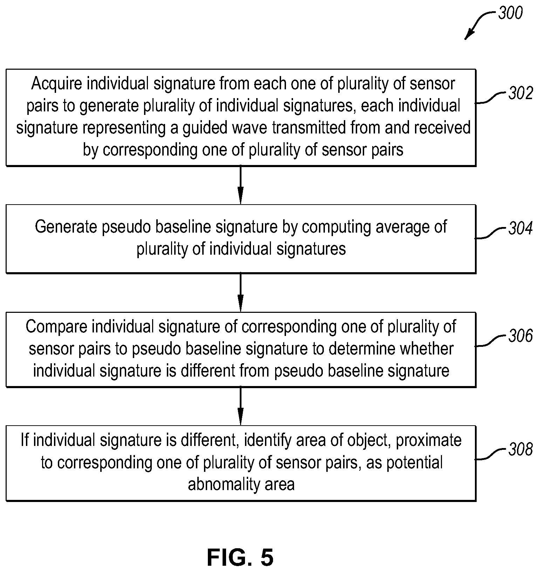

Referring to Figure 5, according to some examples, a method 300 of monitoring structural health of an object 148 is shown. The method 300 includes the step of (block 302) acquiring an individual signature from each one of a plurality of sensor pairs 102 to generate a plurality of individual signatures 144. Each individual signature represents a guided wave 105 transmitted by an exciting sensor 104 and received by a receiving sensor 106 of a corresponding one of the plurality of sensor pairs. The guided waves 105 propagate through or along the object 148, capturing information about the object's structural health, such that the individual signatures can be used to identify any discrepancies that may indicate potential structural abnormalities.

The method 300 also includes the step of (block 304) generating a pseudo baseline signature 146 by computing an average of the plurality of individual signatures 144. The pseudo baseline signature 146 serves as a reference measurement that represents the expected normal condition of the object 148. By averaging the individual signatures 144, the pseudo baseline signature 146 minimizes the impact of any random variations or noise, providing a standard against which individual signatures can be compared to detect abnormalities.

The method 300 further includes the step of (block 306) comparing the individual signature of a corresponding one of the plurality of sensor pairs 102 to the pseudo baseline signature 146 to determine whether the individual signature of the corresponding one of the plurality of sensor pairs 102 is different from the pseudo baseline signature 146. This comparison involves analyzing the individual signature for any deviations from the pseudo baseline signature 146. Differences between the two signatures can indicate potential structural abnormalities in the area monitored by the corresponding sensor pair. The threshold for considering the two signatures as different may vary depending on the specific object or application.

If the individual signature of the corresponding one of the plurality of sensor pairs 102 is different, the method 300 includes the step of (block 308) identifying an area of the object 148, proximate to the corresponding one of the plurality of sensor pairs 102 as a potential abnormality area 158. That is, the method 300 may be used to identify a specific are of the object 148 as a potential abnormality area. This targeted identification allows for focused inspections and timely maintenance to address any detected structural concerns.

In some examples, the method 300 includes defining an abnormality index based on a degree of deviation between the pseudo baseline signature 146 and the plurality of individual signatures 144, and defining an individual index based on a degree of deviation between the pseudo baseline signature 146 and the individual signature of the corresponding one of the plurality of sensor pairs. The corresponding one of the plurality of sensor pairs 102 is different from the pseudo baseline signature 146 if the individual index is larger than the abnormality index. Accordingly, the area 156 of the object 148 proximate to the corresponding one of the plurality of sensor pairs 102 is identified as the potential abnormality area 158.

In some examples, the method 300 is configured to operate in a periodic monitoring mode. In the periodic monitoring mode, the individual signatures of each one of the plurality of sensor pairs 102 are acquired and compared to the pseudo baseline signature 146 at specific monitoring times to detect and identify the potential abnormality areas. In other examples, the method 300 is configured to operate in a continuous monitoring mode. In the continuous monitoring mode, the method is continuously acquired updated individual signatures from each one of the plurality of sensor pairs 102, generating an updated pseudo baseline signature, and comparing the updated individual signature to the updated pseudo baseline signature to enable real-time detection and identification of the potential abnormality areas.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The term "about" or "substantially" in some examples, is defined to mean within +/-5% of a given value, however in additional examples any disclosure of "about" may be further narrowed and claimed to mean within +/- 4% of a given value, within +/- 3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples, and specifically intended to include the range of at least the A value and/or no more than the B value, where A may be any of the disclosed values other than the largest disclosed value, and B may be any of the disclosed values other than the smallest disclosed value.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for examples may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The described features, structures, or characteristics of the examples may be combined in any suitable manner. In the above description, numerous specific details are provided, such as examples of programming, software modules, user selections, network transactions, database queries, database structures, hardware modules, hardware circuits, hardware chips, etc., to provide a thorough understanding of examples. One skilled in the relevant art will recognize, however, that examples may be practiced without one or more of the specific details, or with other methods, components, materials, and so forth. **In** other instances, well-known structures, materials, or operations are not shown or described in detail to avoid obscuring aspects of an example.

Aspects of the examples are described above with reference to schematic flowchart diagrams and/or schematic block diagrams of methods, apparatuses, systems, and program products according to examples. It will be understood that each block of the schematic flowchart diagrams and/or schematic block diagrams, and combinations of blocks in the schematic flowchart diagrams and/or schematic block diagrams, can be implemented by code. These code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the figures illustrate the architecture, functionality, and operation of possible implementations of apparatuses, systems, methods and program products according to various examples. **In** this regard, each block in the schematic flowchart diagrams and/or schematic block diagrams may represent a module, segment, or portion of code, which comprises one or more executable instructions of the code for implementing the specified logical function(s).

Further examples are set out in the clauses below:
1. An apparatus for monitoring structural health of an object, the apparatus comprising:
   a plurality of sensor pairs configured to be coupled to the object, wherein each one of the plurality of sensor pairs comprises an exciting sensor and a receiving sensor, and wherein:
   the exciting sensor is configured to transmit a guided wave;
   the receiving sensor is configured to receive the guided wave transmitted by the exciting sensor; and
   the plurality of sensor pairs are geometrically similar to each other;
   a processor; and
   a memory that stores code executable by the processor to:
      acquire an individual signature from each one of the plurality of sensor pairs to generate a plurality of individual signatures, wherein each individual signature represents the guided wave received by the receiving sensor of a corresponding one of the plurality of sensor pairs;
         generate a pseudo baseline signature by computing an average of the plurality of individual signatures;
         compare the individual signature of a corresponding one of the plurality of sensor pairs to the pseudo baseline signature to determine whether the individual signature of the corresponding one of the plurality of sensor pairs is different from the pseudo baseline signature; and
      if the individual signature of the corresponding one of the plurality of sensor pairs is different, identify an area of the object, proximate to the corresponding one of the plurality of sensor pairs, as a potential abnormality area.
2. The apparatus of clause 1, wherein the guided wave transmitted by the exciting sensor of each one of the plurality of sensor pairs is a lamb wave.
3. The apparatus of clause 1, wherein the guided wave transmitted by the exciting sensor of each one of the plurality of sensor pairs is a surface wave.
4. The apparatus of any one of the preceding clauses, wherein after the pseudo baseline signature is generated, the pseudo baseline signature is promptly compared to the individual signature of the corresponding one of the plurality of sensor pairs.
5. The apparatus of any one of the preceding clauses, wherein the geometric similarly of each one of the plurality of sensor pairs comprises:
   each one of the plurality of sensor pairs has a distance that is the same between the exciting sensor and the receiving sensor; and
   each one of the plurality of sensor pairs has a consistent spatial displacement in three-dimensional space between the exciting sensor and the receiving sensor.
6. The apparatus of any one of the preceding clauses, wherein the memory further stores code executable by the processor to:
   define an abnormality index based on a degree of deviation between the pseudo baseline signature and the plurality of individual signatures; and
   define an individual index based on a degree of deviation between the pseudo baseline signature and the individual signature of the corresponding one of the plurality of sensor pairs, wherein:
      the abnormality index and the individual index are numerical values; and
      the corresponding one of the plurality of sensor pairs is different from the pseudo baseline signature if the individual index is larger than the abnormality index, such that the area of the object proximate to the corresponding one of the plurality of sensor pairs is identified as the potential abnormality area.
7. The apparatus of any one of the preceding clauses, wherein, if the individual signature of the corresponding one of the plurality of sensor pairs is similar to the pseudo baseline signature, then the area of the object, proximate to the corresponding one of the plurality of sensor pairs is identified as a structurally normal area.
8. The apparatus of any one of the preceding clauses, wherein:
   the plurality of sensor pairs are configured to operate in a continuous monitoring mode; and
   the processor continuously acquires an updated individual signature from each one of the plurality of sensor pairs, generates an updated pseudo baseline signature, and compares the updated individual signature from each one of the plurality of sensor pairs to the updated pseudo baseline signature to provide real-time detection and identification of the potential abnormality area.
9. A structural health monitoring system comprising:
   an object to be monitored for structural health;
   a plurality of sensor pairs coupled to the object, wherein each one of the plurality of sensor pairs comprises an exciting sensor and a receiving sensor, and wherein:
      the exciting sensor is configured to transmit a guided wave;
      the receiving sensor is configured to receive the guided wave
      transmitted by the exciting sensor;
      the plurality of sensor pairs are geometrically similar to each other; and
      a structure of the object through which the guided wave of each one of the plurality of sensor pairs propagates is the same;
      a processor; and
      a memory that stores code executable by the processor to:
         acquire an individual signature from each one of the plurality of sensor pairs to generate a plurality of individual signatures, wherein each individual signature represents the guided wave received by the receiving sensor of a corresponding one of the plurality of sensor pairs;
         generate a pseudo baseline signature by computing an average of the plurality of individual signatures;
            compare the individual signature of a corresponding one of the plurality of sensor pairs to the pseudo baseline signature to determine whether the individual signature of the corresponding one of the plurality of sensor pairs is different from the pseudo baseline signature; and
            if the individual signature of the corresponding one of the plurality of sensor pairs is different, identify an area of the object, proximate to the corresponding one of the plurality of sensor pairs, as a potential abnormality area.
10. The structural health monitoring system of clause 9, wherein the guided wave transmitted by the exciting sensor of each one of the plurality of sensor pairs is configured to propagate through a thickness of the object in a propagation direction that is parallel to a surface of the object.
11. The structural health monitoring system of clause 9, wherein the guided wave transmitted by the exciting sensor of each one of the plurality of sensor pairs is configured to propagate along a surface of the object, moving in a circular or elliptical motion from the exciting sensor.
12. The structural health monitoring system of any one of clauses 9-11, wherein the plurality of sensors pairs are positioned on a surface of the structure of the object.
13. The structural health monitoring system of any one of clauses 9-11, wherein the plurality of sensors pairs are embedded within the structure of the object.
14. The structural health monitoring system of any one of clauses 9-11, wherein the plurality of sensor pairs are coupled to, or located proximate to, a plurality of rivet pairs on the object, wherein individual rivets of each one of the plurality of rivet pairs are spaced equidistant from each other.
15. The structural health monitoring system of any one of clauses 9-14, wherein the object to be monitored for abnormalities is an aircraft.
16. The structural health monitoring system of any one of clauses 9-14, wherein the plurality of sensor pairs are coupled to a localized area of the object, wherein the localized area of the object corresponds to an area of the object that is susceptible to abnormalities.
17. A method of monitoring structural health of an object, the method comprising:
   acquiring an individual signature from each one of a plurality of sensor pairs to generate a plurality of individual signatures, wherein each individual signature represents a guided wave transmitted by an exciting sensor and received by a receiving sensor of a corresponding one of the plurality of sensor pairs;
   generating a pseudo baseline signature by computing an average of the plurality of individual signatures;
   comparing the individual signature of a corresponding one of the plurality of sensor pairs to the pseudo baseline signature to determine whether the individual signature of the corresponding one of the plurality of sensor pairs is different from the pseudo baseline signature; and
   if the individual signature of the corresponding one of the plurality of sensor pairs is different,
   identifying an area of the object, proximate to the corresponding one of the plurality of sensor pairs, as a potential abnormality area.
18. The method of clause 17, further comprising:
   defining an abnormality index based on a degree of deviation between the pseudo baseline signature and the plurality of individual signatures; and
   defining an individual index based on a degree of deviation between the pseudo baseline signature and the individual signature of the corresponding one of the plurality of sensor pairs;
   wherein the corresponding one of the plurality of sensor pairs is different from the pseudo baseline signature if the individual index is larger than the abnormality index, such that the area of the object proximate to the corresponding one of the plurality of sensor pairs is identified as the potential abnormality area.
19. The method of clause 17 or 18, wherein the plurality of sensor pairs are configured to operate in a periodic monitoring mode, such that the individual signature from each one of the plurality of sensor pairs is acquired and compared to the pseudo baseline signature at specific monitoring times to detect and identify potential abnormality areas.
20. The method of any one of clauses 17-19, wherein the plurality of sensor pairs are configured to operate in a continuous monitoring mode, continuously acquiring an updated individual signature from each one of the plurality of sensor pairs, generating an updated pseudo baseline signature, and comparing the updated individual signature from each one of the plurality of sensor pairs to the updated pseudo baseline signature to enable real-time detection and identification of the potential abnormality area.

The present subject matter may be embodied in other specific forms without departing from its characteristics. The described examples are to be considered in all respects only as illustrative and not restrictive. All changes which come within the meaning and range of equivalency of the examples herein are to be embraced within their scope.

## Claims

1. An apparatus (100) for monitoring structural health of an object (148), the apparatus (100) comprising:
a plurality of sensor pairs (102) configured to be coupled to the object (148), wherein each one of the plurality of sensor pairs (102) comprises an exciting sensor (104) and a receiving sensor (106), and wherein:
the exciting sensor (104) is configured to transmit a guided wave (105);
the receiving sensor (106) is configured to receive the guided wave (105) transmitted by the exciting sensor (104); and
the plurality of sensor pairs (102) are geometrically similar to each other;
a processor (120); and
a memory (122) that stores code executable by the processor (120) to:
acquire an individual signature from each one of the plurality of sensor pairs (102) to generate a plurality of individual signatures (144), wherein each individual signature represents the guided wave (105) received by the receiving sensor (106) of a corresponding one of the plurality of sensor pairs (102);
generate a pseudo baseline signature (146) by computing an average of the plurality of individual signatures (144);
compare the individual signature of a corresponding one of the plurality of sensor pairs (102) to the pseudo baseline signature (146) to determine whether the individual signature of the corresponding one of the plurality of sensor pairs (102) is different from the pseudo baseline signature (146); and
if the individual signature of the corresponding one of the plurality of sensor pairs (102) is different, identify an area (156) of the object (148), proximate to the corresponding one of the plurality of sensor pairs (102), as a potential abnormality area (158).

2. The apparatus (100) of claim 1, wherein the guided wave (105) transmitted by the exciting sensor (104) of each one of the plurality of sensor pairs (102) is a lamb wave.

3. The apparatus (100) of claim 1, wherein the guided wave (105) transmitted by the exciting sensor (104) of each one of the plurality of sensor pairs (102) is a surface wave.

4. The apparatus (100) of any one of the preceding claims, wherein after the pseudo baseline signature (146) is generated, the pseudo baseline signature (146) is promptly compared to the individual signature of the corresponding one of the plurality of sensor pairs (102).

5. The apparatus (100) of any one of the preceding claims, wherein the geometric similarly of each one of the plurality of sensor pairs (102) comprises:
each one of the plurality of sensor pairs (102) has a distance (D1) that is the same between the exciting sensor (104) and the receiving sensor (106); and
each one of the plurality of sensor pairs (102) has a consistent spatial displacement in three-dimensional space between the exciting sensor (104) and the receiving sensor (106).

6. The apparatus (100) of any one of the preceding claims, wherein the memory (122) further stores code executable by the processor (120) to:
define an abnormality index based on a degree of deviation between the pseudo baseline signature (146) and the plurality of individual signatures (144); and
define an individual index based on a degree of deviation between the pseudo baseline signature (146) and the individual signature of the corresponding one of the plurality of sensor pairs (102), wherein:
the abnormality index and the individual index are numerical values; and
the corresponding one of the plurality of sensor pairs (102) is different from the pseudo baseline signature (146) if the individual index is larger than the abnormality index, such that the area (156) of the object (148) proximate to the corresponding one of the plurality of sensor pairs (102) is identified as the potential abnormality area (158).

7. The apparatus (100) of any one of the preceding claims, wherein, if the individual signature of the corresponding one of the plurality of sensor pairs (102) is similar to the pseudo baseline signature (146), then the area (156) of the object (148), proximate to the corresponding one of the plurality of sensor pairs (102) is identified as a structurally normal area (160).

8. The apparatus (100) of any one of the preceding claims, wherein:
the plurality of sensor pairs (102) are configured to operate in a continuous monitoring mode; and
the processor (120) continuously acquires an updated individual signature from each one of the plurality of sensor pairs (102), generates an updated pseudo baseline signature, and compares the updated individual signature from each one of the plurality of sensor pairs (102) to the updated pseudo baseline signature (146) to provide real-time detection and identification of the potential abnormality area.

9. A structural health monitoring system (200) comprising the apparatus of claim 1, and further comprising:
an object (148) to be monitored for structural health;
and
a structure (150) of the object (148) through which the guided wave (105) of each one of the plurality of sensor pairs (102) propagates is the same.

10. The structural health monitoring system (200) of claim 9, wherein the guided wave (105) transmitted by the exciting sensor (104) of each one of the plurality of sensor pairs (102) is configured to propagate through a thickness (T) of the object (148) in a propagation direction (154) that is parallel to a surface (152) of the object (148).

11. The structural health monitoring system (200) of claim 9, wherein the guided wave (105) transmitted by the exciting sensor (104) of each one of the plurality of sensor pairs (102) is configured to propagate along a surface (152) of the object (148), moving in a circular or elliptical motion from the exciting sensor (104).

12. The structural health monitoring system (200) of any one of claims - 11, wherein the plurality of sensors pairs (102) are positioned on a surface (152) of the structure (150) of the object (148).

13. The structural health monitoring system (200) of claim 9, wherein the plurality of sensors pairs (102) are embedded within the structure (150) of the object (148); or optionally
wherein the plurality of sensor pairs (102) are coupled to, or located proximate to, a plurality of rivet pairs (164) on the object (148), wherein individual rivets (162) of each one of the plurality of rivet pairs (164) are spaced equidistant from each other; or optionally
wherein the object (148) to be monitored for abnormalities is an aircraft (166); or optionally
wherein the plurality of sensor pairs (102) are coupled to a localized area (168) of the object (148), wherein the localized area (168) of the object (148) corresponds to an area of the object (148) that is susceptible to abnormalities.

14. A method (300) of monitoring structural health of an object (148), the method (300) comprising:
acquiring (302) an individual signature from each one of a plurality of sensor pairs (102) to generate a plurality of individual signatures (144), wherein each individual signature represents a guided wave (105) transmitted by an exciting sensor (104) and received by a receiving sensor (106) of a corresponding one of the plurality of sensor pairs (102);
generating (304) a pseudo baseline signature (146) by computing an average of the plurality of individual signatures (144);
comparing (306) the individual signature of a corresponding one of the plurality of sensor pairs (102) to the pseudo baseline signature (146) to determine whether the individual signature of the corresponding one of the plurality of sensor pairs (102) is different from the pseudo baseline signature (146); and
if the individual signature of the corresponding one of the plurality of sensor pairs (102) is different, identifying (308) an area (156) of the object (148), proximate to the corresponding one of the plurality of sensor pairs (102), as a potential abnormality area (158).

15. The method (300) of claim 14, further comprising:
defining an abnormality index based on a degree of deviation between the pseudo baseline signature (146) and the plurality of individual signatures (144); and
defining an individual index based on a degree of deviation between the pseudo baseline signature (146) and the individual signature (144) of the corresponding one of the plurality of sensor pairs (102);
wherein the corresponding one of the plurality of sensor pairs (102) is different from the pseudo baseline signature (146) if the individual index is larger than the abnormality index, such that the area (156) of the object (148) proximate to the corresponding one of the plurality of sensor pairs (102) is identified as the potential abnormality area (158); or optionally
wherein the plurality of sensor pairs (102) are configured to operate in a periodic monitoring mode, such that the individual signature from each one of the plurality of sensor pairs (102) is acquired and compared to the pseudo baseline signature (146) at specific monitoring times to detect and identify potential abnormality areas; or optionally
wherein the plurality of sensor pairs (102) are configured to operate in a continuous monitoring mode, continuously acquiring an updated individual signature from each one of the plurality of sensor pairs (102), generating an updated pseudo baseline signature, and comparing the updated individual signature from each one of the plurality of sensor pairs (102) to the updated pseudo baseline signature to enable real-time detection and identification of the potential abnormality area.
